# EUROPÄISCHE PATENTSCHRIFT

(11) **EP 3 914 449 B1**
(45) Veröffentlichungstag und Bekanntmachung des Hinweises auf die Patenterteilung: **24.05.2023**
(21) Anmeldenummer: 20701316.0
(22) Anmeldetag: 20.01.2020
(51) Int. Cl.: B32B 17/10, H05B 3/86, C09K 19/02

(54) **VERBUNDSCHEIBENANORDNUNGEN MIT ELEKTROOPTISCHEM FUNKTIONSELEMENT**
LAMINATED GLAZING WITH ELECTRICALLY DRIVEN OPTICAL PROPERTIES AND LAMINATED GLAZING ASSEMBLY
VITRE FEUILLETÉE PRÉSENTANT DES PROPRIÉTÉS OPTIQUES À COMMANDE ÉLECTRIQUE ET AGENCEMENT DE VITRE FEUILLETÉE

(30) Priorität: 22.01.2019 EP 19152938
(43) Veröffentlichungstag der Anmeldung: 01.12.2021
(73) Patentinhaber: Saint-Gobain Glass France, 92400 Courbevoie (FR)
(72) Erfinder: DROSTE, Stefan, 52134 Herzogenrath (DE); MANZ, Florian, 52064 Aachen (DE); KLEIN, Marcel, 52499 Baesweiler (DE); KLAUSS, Bastian, 52134 Herzogenrath (DE); ZEISS, Michael, 52525 Heinsberg-Haaren (DE)
(74) Vertreter: Gebauer, Dieter Edmund
(86) Internationale Anmeldenummer: PCT/EP2020/051221
(87) Internationale Veröffentlichungsnummer: WO 2020/152075

(56) Entgegenhaltungen:
- DE-A1- 4 121 385
- DE-A1-102010 048 097
- GB-A- 1 536 568
- US-A- 5 124 833

## Beschreibung

Die Erfindung betrifft Verbundscheibenanordnungen, welche jeweils eine Verbundscheibe mit einem elektrooptischen Funktionselement auf Basis von Flüssigkristallen aufweisen.

Elektrooptische Funktionselemente mit elektrisch steuerbaren optischen Eigenschaften sind seit langem in großer Vielgestaltigkeit bekannt und werden in der industriellen Massenproduktion, beispielsweise in TV-Geräten, Laptops, Mobiltelefonen/Smartphones und Tablets, eingesetzt.

Auch Verbundscheiben mit elektrooptischen Funktionselementen sind als solche bekannt. Die optischen Eigenschaften der Funktionselemente können durch eine angelegte elektrische Spannung verändert werden. Ein Beispiel für solche Funktionselemente sind SPD-Funktionselemente (Suspended Particle Device), die beispielsweise aus EP 0876608 B1 und WO 2011033313 A1 bekannt sind. Durch die angelegte Spannung lässt sich die Transmission von sichtbarem Licht durch SPD-Funktionselemente steuern.

Ein weiteres Beispiel sind Funktionselemente, die auf Flüssigkristallen basieren, insbesondere PDLC-Funktionselemente (Polymer Dispersed Liquid Crystal), die beispielsweise aus DE 102008026339 A1 bekannt sind. Die aktive Schicht enthält dabei Flüssigkristalle, welche in eine Polymermatrix eingelagert sind. Wird keine Spannung an die Flächenelektroden angelegt, so sind die Flüssigkristalle ungeordnet ausgerichtet, was zu einer starken Streuung des durch die aktive Schicht tretenden Lichts führt. Bei angelegter Spannung an die Flächenelektroden richten sich die Flüssigkristalle in einer gemeinsamen Richtung aus und die Transmission von Licht durch die aktive Schicht wird erhöht.

Es wurden Windschutzscheiben vorgeschlagen, bei denen durch ein elektrooptisches Funktionselement eine elektrisch steuerbare Sonnenblende realisiert ist, um die herkömmliche mechanisch klappbare Sonnenblende in Kraftfahrzeugen zu ersetzen. Windschutzscheiben mit elektrisch steuerbaren Sonnenblenden sind beispielsweise aus DE 102013001334 A1, DE 102005049081 B3, DE 102005007427 A1 und DE 102007027296 A1 bekannt.

SPD- oder PDLC-Funktionselemente sind als Mehrschichtfolien kommerziell erhältlich, wobei die aktive Schicht und die zum Anlegen einer Spannung erforderlichen Flächenelektroden zwischen zwei Trägerfolien, typischer Weise aus PET, angeordnet sind. Bei der Herstellung der Verbundscheibe wird das Funktionselement in der gewünschten Größe und Form aus der Mehrschichtfolie ausgeschnitten und zwischen die Folien einer Zwischenschicht eingelegt, mittels derer zwei Glasscheiben miteinander zur Verbundscheibe laminiert werden.

Wie dem Fachmann an sich bekannt ist, hängt die Schaltcharakteristik, insbesondere die Reaktionsgeschwindigkeit, von elektrooptischen Funktionselementen von der Temperatur der aktiven Schicht ab. In der Praxis kann somit, abhängig von den jeweiligen Umweltbedingungen, eine unerwünschte Änderung der Schaltcharakteristik des Funktionselements auftreten.

Um dieses Problem zu beheben, zeigt die DE 10 2010048097 A eine Scheibe mit einem durch eine Gleichspannung schaltbaren Funktionselement auf Basis eines elektrochromen Materials, bei dem beide Flächenelektroden durch eine Gleichspannung heizbar sind (elektrische Widerstandsheizung). Der DE 4121385 A1 kann ein analoges Funktionselement entnommen werden. Die US 5124833 zeigt ebenfalls ein Funktionselement mit einem elektrochromen Material, das durch eine Gleichspannung geschaltet wird, wobei eine Flächenelektrode durch Anlegen einer Wechselspannung geheizt werden kann.

Demgegenüber besteht die Aufgabe der vorliegenden Erfindung darin, eine verbesserte Verbundscheibenanordnung mit einer Verbundscheibe mit einem Funktionselement auf Basis von Flüssigkristallen zur Verfügung zu stellen, dessen Schaltcharakteristik durch Heizen mindestens einer Flächenelektrode unabhängig von der Temperatur der äußeren Umgebung ist.

Die Aufgabe wird durch Verbundscheibenanordnungen mit den Merkmalen der unabhängigen Patentansprüche gelöst. Vorteilhafte Ausgestaltungen ergeben sich aus den Unteransprüchen.

Erfindungsgemäß sind zwei verschiedene Verbundscheibenanordnungen gezeigt, die jeweils eine Verbundscheibe aufweisen. Beide Verbundscheibenanordnungen lösen die vorstehend genannte Aufgabe und beruhen auf demselben erfinderischen Konzept, sowohl eine Steuerung der optischen Eigenschaften der aktiven Schicht als auch eine elektrische Widerstandsheizung mindestens einer Flächenelektrode durch Beaufschlagen mit zwei verschiedenen Wechselspannungen zu realisieren.

Die Verbundscheibe umfasst eine Außenscheibe und eine Innenscheibe, die über eine Zwischenschicht miteinander verbunden sind. Die Verbundscheibe ist dafür vorgesehen, in einer Fensteröffnung beispielsweise eines Kraftfahrzeugs oder eines Gebäudes den Innenraum gegenüber der äußeren Umgebung abzutrennen. Mit Innenscheibe wird im Sinne der Erfindung die dem Innenraum zugewandte Scheibe bezeichnet. Mit Außenscheibe wird die der äußeren Umgebung zugewandte Scheibe bezeichnet. Die thermoplastische Zwischenschicht dient der Verbindung beider Scheiben, wie es bei Verbundscheiben üblich ist.

Die Außenscheibe und die Innenscheibe sind bevorzugt aus Glas gefertigt. Grundsätzlich können sie aber auch aus Kunststoff bestehen. Die Dicke der Außenscheibe und der Innenscheibe kann breit variieren und so den Erfordernissen im Einzelfall angepasst werden. Die Außenscheibe und die Innenscheibe weisen bevorzugt Dicken von 0,4 mm bis 3,5 mm auf, besonders bevorzugt von 1 mm bis 2,5 mm. Die Scheiben können klar, getönt oder gefärbt sein, solange die Verbundscheibe im zentralen Sichtbereich eine ausreichende Lichttransmission aufweist, bevorzugt mindestens 70 % im Haupt-Durchsichtbereich A gemäß ECE-R43, wenn es sich bei der Verbundscheibe um eine Windschutzscheibe handelt.

Die Außenscheibe, die Innenscheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen.

Die Verbundscheibe enthält ein elektrooptisches Funktionselement mit elektrisch steuerbaren optischen Eigenschaften, das in die Zwischenschicht eingelagert ist. Vorteilhaft ist das Funktionselement zwischen mindestens zwei Schichten von thermoplastischem Material der Zwischenschicht angeordnet, wobei es durch die erste Schicht mit der Außenscheibe und durch die zweite Schicht mit der Innenscheibe verbunden ist.

Das Funktionselement umfasst mindestens eine aktive Schicht auf Basis von Flüssigkristallen, die vorzugsweise zwischen einer ersten Trägerfolie und einer zweiten Trägerfolie angeordnet ist. Die aktive Schicht weist die veränderlichen optischen Eigenschaften auf, die durch eine an die aktive Schicht angelegte elektrische Wechselspannung gesteuert werden können. Unter elektrisch steuerbaren optischen Eigenschaften werden im Sinne der Erfindung solche Eigenschaften verstanden, die stufenlos steuerbar sind, aber gleichermaßen auch solche, die zwischen zwei oder mehr diskreten Zuständen geschaltet werden können. Die optischen Eigenschaften betreffen insbesondere die Lichttransmission und/oder das Streuverhalten von Licht.

Das Funktionselement umfasst außerdem zwei Flächenelektroden (flächige Steuerelektroden) zum Anlegen einer Wechselspannung an die aktive Schicht, die bevorzugt zwischen den Trägerfolien und der aktiven Schicht angeordnet sind. Typischer Weise ist auf jeder Seite der aktiven Schicht eine Flächenelektrode zur Steuerung der optischen Eigenschaften der aktiven Schicht angeordnet. Die Flächenelektroden sind mit der aktiven Schicht elektrisch leitend verbunden. Die Flächenelektroden können der aktiven Schicht unmittelbar aufliegen, wobei gleichermaßen elektrisch leitende Zwischenschichten zwischen den Flächenelektroden und der aktiven Schicht vorgesehen sein können.

Im Funktionselement dient mindestens eine der Flächenelektroden, insbesondere beide Flächenelektroden, zur Temperatureinstellung der aktiven Schicht auf eine vorbestimmte bzw. vorbestimmbare Temperatur. Die Flächenelektroden dienen also nicht nur, wie stets bei derartigen Verbundscheiben, zur elektrischen Steuerung der optischen Eigenschaften des Funktionselements, sondern zusätzlich zur Einstellung einer hinsichtlich des Schaltverhaltens vorteilhaften Temperatur der aktiven Schicht.

Die mindestens eine Flächenelektrode, die zur Erwärmung der aktiven Schicht dient, ist hinsichtlich der Materialzusammensetzung und/oder Schichtdicke so ausgebildet, dass über den Flächenwiderstand eine Temperierung der aktiven Schicht auf eine vorbestimmte bzw. vorbestimmbare Temperatur beim Anschluss an eine Spannungsquelle erreicht wird. Die mindestens eine flächige Flächenelektrode, die zur aktiven Heizung der aktiven Schicht dient, kann durch Ohmsche Heizung (Widerstandsheizung) erwärmt werden, wenn sie mit einer entsprechenden Spannung beaufschlagt wird. Durch Erwärmen mindestens einer Flächenelektrode, insbesondere beider Flächenelektroden, kann die aktive Schicht in gewünschter Weise erwärmt werden.

Die optischen Eigenschaften des Funktionselements auf Basis von Flüssigkristallen können durch Anlegen einer elektrischen Wechselspannung (AC) gesteuert werden. Eine elektrische Gleichspannung (DC) ist hierfür nicht geeignet. Vorzugsweise handelt es sich bei dem Funktionselement auf Basis von Flüssigkristallen um ein PDLC-Funktionselement. Die aktive Schicht eines PDLC-Funktionselements enthält Flüssigkristalle, welche in eine Polymermatrix eingelagert sind. Ein solches PDLC-Funktionselement und dessen Funktionsweise sind dem Fachmann an sich bekannt, so dass an dieser Stelle auf eine ausführliche Beschreibung verzichtet werden kann.

Die Flächenelektroden und die aktive Schicht sind flächige Gebilde und typischer Weise im Wesentlichen parallel zu den Oberflächen der Außenscheibe und der Innenscheibe angeordnet.

Die Flächenelektroden des Funktionselements sind mit zwei externen Spannungsquellen zur Bereitstellung voneinander verschiedener Wechselspannungen auf an sich bekannte Art und Weise elektrisch verbunden. Die Flächenelektroden weisen zu diesem Zweck jeweils elektrische Anschlüsse auf, wobei jede Flächenelektrode mindestens einen elektrischen Anschluss aufweist.

Die Flächenelektroden sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (Transparent Conducting Oxide, TCO). Die Flächenelektroden können beispielsweise Silber, Gold, Kupfer, Nickel, Chrom, Wolfram, Indium-Zinnoxid (ITO), Gallium-dotiertes oder Aluminium-dotiertes Zinkoxid und/oder Fluor-dotiertes oder Antimon-dotiertes Zinnoxid enthalten. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm.

Das Funktionselement liegt insbesondere als Mehrschichtfolie mit zwei äußeren Trägerfolien vor. Bei einer solchen Mehrschichtfolie sind die Flächenelektroden und die aktive Schicht typischerweise zwischen den beiden Trägerfolien angeordnet. Mit äußerer Trägerfolie ist hier gemeint, dass die Trägerfolien die beiden Oberflächen der Mehrschichtfolie ausbilden. Das Funktionselement kann dadurch als vorgefertigte laminierte Folie bereitgestellt werden, die vorteilhaft weiterverarbeitet werden kann. Das Funktionselement ist durch die beiden Trägerfolien vorteilhaft vor Beschädigung, insbesondere Korrosion, geschützt.

Jede Spannungsquelle verfügt über zwei Spannungsausgänge zur Bereitstellung einer elektrischen Wechselspannung. Die elektrischen Anschlüsse der Flächenelektroden sind über elektrische Leitungen mit den Spannungsausgängen der Spannungsquellen elektrisch leitend verbunden.

Gemäß einem ersten Aspekt der Erfindung ist eine Verbundscheibenanordnung gezeigt, welche eine Verbundscheibe mit einem elektrooptischen Funktionselement aufweist, wie sie vorstehend beschrieben ist.

Das Funktionselement weist eine erste Flächenelektrode und eine zweite Flächenelektrode auf. Die erste Flächenelektrode ist mit einem ersten Anschluss und einem zweiten Anschluss versehen, die vorzugsweise in der Ebene der ersten Flächenelektrode einander gegenüberliegend angeordnet sind. In entsprechender Weise ist die zweite Flächenelektrode mit einem ersten Anschluss und einem zweiten Anschluss versehen, die vorzugsweise in der Ebene der zweiten Flächenelektrode einander gegenüberliegend angeordnet sind.

Vorteilhaft ist ein Abstand zwischen dem ersten und zweiten Anschluss der ersten Flächenelektrode gleich zu einem Abstand zwischen dem ersten und zweiten Anschluss der zweiten Flächenelektrode.

Die Verbundscheibenanordnung umfasst weiterhin einen ersten Schaltkreis, der eine erste Spannungsquelle mit einem ersten und zweiten Spannungsausgang zum Bereitstellen einer ersten Wechselspannung aufweist.

Die Verbundscheibenanordnung umfasst des Weiteren einen zweiten Schaltkreis, der eine zweite Spannungsquelle mit einem ersten und zweiten Spannungsausgang zum Bereitstellen einer zweiten Wechselspannung aufweist.

Wesentlich hierbei ist, dass eine Maximalspannung (maximale Amplitude) der zweiten Wechselspannung größer ist als eine Maximalspannung der ersten Wechselspannung und die beiden Wechselspannungen eine gleiche Frequenz haben. Als Maximalwert der Wechselspannung ist der größte Spannungswert (Absolutwert) der Wechselspannung zu verstehen. Vorzugsweise sind die beiden Wechselspannungen in Phase, d.h. gleichphasig.

Der erste Spannungsausgang der ersten Spannungsquelle ist ausschließlich mit dem ersten Anschluss der ersten Flächenelektrode elektrisch leitend verbunden und der zweite Spannungsausgang der ersten Spannungsquelle ist ausschließlich mit dem ersten Anschluss der zweiten Flächenelektrode elektrisch leitend verbunden. Zudem ist der erste Spannungsausgang der zweiten Spannungsquelle ausschließlich mit dem zweiten Anschluss der ersten Flächenelektrode elektrisch leitend verbunden und der zweite Spannungsausgang der zweiten Spannungsquelle ist ausschließlich mit dem zweiten Anschluss der zweiten Flächenelektrode elektrisch leitend verbunden.

Die Beschaltung der beiden Flächenelektroden mit zwei verschiedenen Wechselspannungen ermöglicht einerseits eine elektrische Widerstandsheizung beider Flächenelektroden durch die in der jeweiligen Ebene der Flächenelektroden abfallenden Wechselspannungen. Andererseits können die optischen Eigenschaften des Funktionselements durch eine lokale Wechselspannung, die senkrecht zum Funktionselement bzw. zur aktiven Schicht eine gleiche Frequenz und vorzugsweise eine gleiche Amplitude aufweist, gesteuert werden. Die beiden Spannungsquellen dienen somit gemeinsam sowohl zum Schalten bzw. Steuern der optischen Eigenschaften des Funktionselements als auch zum Heizen der Flächenelektroden. Die Anschlüsse der Flächenelektroden werden zum Steuern der optischen Eigenschaften der aktiven Schicht und zum Widerstandsheizen der Flächenelektroden verwendet. Es ist vorteilhafter Weise nicht erforderlich, separate Anschlüsse zum Steuern der optischen Eigenschaften des Funktionselements und Heizen der Flächenelektroden vorzusehen.

Gemäß einem zweiten Aspekt der Erfindung ist eine Verbundscheibenanordnung gezeigt, welche eine Verbundscheibe mit einem elektrooptischen Funktionselement aufweist, wie sie vorstehend beschrieben ist.

Die Verbundscheibenanordnung umfasst einen ersten Schaltkreis, der eine erste Spannungsquelle mit einem ersten und zweiten Spannungsausgang zum Bereitstellen einer ersten Wechselspannung aufweist.

Die Verbundscheibenanordnung umfasst des Weiteren einen zweiten Schaltkreis, der eine zweite Spannungsquelle mit einem ersten und zweiten Spannungsausgang zum Bereitstellen einer zweiten Wechselspannung aufweist.

Wesentlich hierbei ist, dass die Frequenz der zweiten Spannungsquelle größer ist als die Frequenz der ersten Spannungsquelle. Die Maximalwerte der beiden Wechselspannungen können gleich oder voneinander verschieden sein.

Der erste Spannungsausgang der ersten Spannungsquelle ist ausschließlich mit einem ersten Anschluss der ersten Flächenelektrode elektrisch leitend verbunden und der zweite Spannungsausgang der ersten Spannungsquelle ist ausschließlich mit einem ersten Anschluss der zweiten Flächenelektrode elektrisch leitend verbunden. Die erste Spannungsquelle dient nur zum Schalten bzw. Steuern der optischen Eigenschaften des Funktionselements. Die erste Spannungsquelle dient somit nicht zum Heizen einer Flächenelektrode.

Mindestens eine Flächenelektrode, insbesondere beide Flächenelektroden, wird durch eine zweite Spannungsquelle geheizt. Die zweite Spannungsquelle dient nur zum Heizen mindestens einer Flächenelektrode. Die zweite Spannungsquelle dient nicht zum Schalten bzw. Steuern der optischen Eigenschaften des Funktionselements.

Der erste Spannungsausgang der zweiten Spannungsquelle ist unter Zwischenschaltung eines Hochpassfilters mit dem mit der ersten Spannungsquelle verbundenen ersten Anschluss oder einem weiteren ersten Anschluss der ersten Flächenelektrode elektrisch leitend verbunden. Zudem ist der zweite Spannungsausgang der zweiten Spannungsquelle unter Zwischenschaltung eines Hochpassfilters mit einem zweiten Anschluss der ersten Flächenelektrode elektrisch leitend verbunden. Hierdurch kann die erste Flächenelektrode elektrisch geheizt werden.

Die erste Flächenelektrode weist somit ein oder zwei erste Anschlüsse sowie einen zweiten Anschluss auf. Falls die erste Flächenelektrode zwei erste Anschlüsse aufweist, dient der eine erste Anschluss zur elektrischen Verbindung nur mit der ersten Spannungsquelle und der andere erste Anschluss dient nur zur Verbindung mit der zweiten Spannungsquelle. Besonders vorteilhaft weist die erste Flächenelektrode nur einen einzigen ersten Anschluss und einen (einzigen) zweiten Anschluss auf. In diesem Fall dient der erste Anschluss sowohl zur Verbindung mit der ersten Spannungsquelle als auch zur Verbindung mit der zweiten Spannungsquelle, so dass der erste Anschluss in vorteilhafter Weise zur direkten elektrischen Verbindung mit beiden Spannungsquellen genutzt wird.

Ergänzend oder alternativ hierzu ist der erste Spannungsausgang der zweiten Spannungsquelle unter Zwischenschaltung eines Hochpassfilters mit dem mit der ersten Spannungsquelle verbundenen ersten Anschluss oder einem weiteren ersten Anschluss der zweiten Flächenelektrode elektrisch leitend verbunden und der zweite Spannungsausgang der zweiten Spannungsquelle ist unter Zwischenschaltung eines Hochpassfilters mit einem zweiten Anschluss der zweiten Flächenelektrode elektrisch leitend verbunden. Hierdurch kann die zweite Flächenelektrode elektrisch geheizt werden.

Die zweite Flächenelektrode weist somit ein oder zwei erste Anschlüsse sowie einen zweiten Anschluss auf. Falls die zweite Flächenelektrode zwei erste Anschlüsse aufweist, dient der eine erste Anschluss zur elektrischen Verbindung nur mit der ersten Spannungsquelle und der andere erste Anschluss dient zur Verbindung nur mit der zweiten Spannungsquelle. Besonders vorteilhaft weist die zweite Flächenelektrode nur einen einzigen ersten Anschluss und einen (einzigen) zweiten Anschluss auf. In diesem Fall dient der erste Anschluss sowohl zur Verbindung mit der ersten Spannungsquelle als auch zur Verbindung mit der zweiten Spannungsquelle, so dass der erste Anschluss in vorteilhafter Weise für beide Spannungsquellen genutzt wird.

Bei Heizung beider Flächenelektroden weist jede Flächenelektrode mindestens zwei Anschlüsse auf, das Funktionselement somit mindestens vier Anschlüsse, insbesondere genau vier Anschlüsse. Bei Heizung nur einer einzigen Flächenelektrode weist die Flächenelektrode mindestens zwei Anschlüsse auf, insbesondere genau zwei Anschlüsse, wobei es genügt, wenn die andere Flächenelektrode nur einen einzigen Anschluss aufweist. Das Funktionselement verfügt demnach über mindestens drei Anschlüsse, insbesondere genau drei Anschlüsse, an den Flächenelektroden.

Die Hochpassfilter, bei denen es sich typischer Weise um Kondensatoren handelt, sind so ausgebildet dass sie für die höher-frequente Wechselspannung der zweiten Spannungsquelle durchlässig sind und die niedriger-frequente Wechselspannung der ersten Spannungsquelle blockieren. Dies vermeidet eine Störung der Steuerung der optischen Eigenschaften des Funktionselements durch die höher-frequente Wechselspannung der zweiten Spannungsquelle, welche ausschließlich zum elektrischen Widerstandsheizen der ersten und/oder zweiten Flächenelektrode dient.

Die Beschaltung der beiden Flächenelektroden mit zwei verschiedenen Wechselspannungen ermöglicht einerseits eine Steuerung der optischen Eigenschaften des Funktionselements durch die erste Wechselspannung mit niedrigerer Frequenz, sowie andererseits eine Widerstandsheizung mindestens einer Flächenelektrode durch die zweite Wechselspannung mit höherer Frequenz. Die Hochpassfilter verhindern ein Stören der Steuerung der optischen Eigenschaften des Funktionselements durch die zweite Wechselspannung mit höherer Frequenz. Die Anschlüsse der Flächenelektroden werden in vorteilhafter Weise sowohl zum Steuern der optischen Eigenschaften der aktiven Schicht als auch zum Widerstandsheizen der Flächenelektroden verwendet.

Die folgenden Ausführungen beziehen sich auf die Verbundscheibenanordnungen gemäß dem ersten und zweiten Aspekt der Erfindung.

Vorteilhaft ist es, wenn die mindestens eine Flächenelektrode, insbesondere beide Flächenelektroden, so geheizt werden, dass die aktive Schicht auf eine Temperatur im Bereich oberhalb von +5°C, bevorzugt oberhalb von 10°C, erwärmt wird. Der Temperaturbereich, auf den die aktive Schicht eingestellt werden sollte, liegt vorzugsweise im Bereich von 5°C bis 25°C, besonders bevorzugt im Bereich von 10°C bis 20°C.

Gemäß einer Ausgestaltung der Erfindung ist vorgesehen, dass zum Anschluss der Flächenelektroden an die Spannungsquellen langgestreckte Anschlüsse, insbesondere Busbars (Sammelschienen), vorzugsweise an gegenüberliegenden Kanten jeder Flächenelektrode vorgesehen sind. Die Flächenelektroden weisen vorzugsweise jeweils eine Rechteckform auf. Je nach Ausgestaltung kann eine Flächenelektrode über ein oder zwei Busbars verfügen.

Vorzugsweise hat das elektrooptische Funktionselement langgestreckte Gestalt und langgestreckte elektrische Anschlüsse sind an Längskanten des Funktionselementes angeordnet. Grundsätzlich ist aber bei einer beispielsweise rechteckigen Gestalt des Funktionselementes zur Realisierung einer Sonnenblende o.ä. auch ein Anschluss über die kurzen Seitenkanten möglich.

Gemäß einer Ausgestaltung weist die Verbundscheibe einen Temperatursensor im oder nahe des elektrooptischen Funktionselements innerhalb der Zwischenschicht auf. Ungeachtet dessen, dass etwa bei einem Einsatz der Verbundscheibenanordnung in Straßenfahrzeugen üblicherweise Außen- und Innen-Temperaturfühler am/im Fahrzeug ohnehin vorhanden sind, ermöglicht eine solche Ausführung eine präzisere Erfassung der Temperatur der aktiven Schicht und somit auch eine zuverlässigere Einstellung der gewünschten Temperatur oder des gewünschten Temperaturbereiches dieser Schicht. Bei geringeren Anforderungen an die Einstellgenauigkeit können aber auch die Signale vorhandener Temperaturfühler (außerhalb der Verbundscheibe) herangezogen werden.

Vorzugsweise ist die Verbundscheibe die Windschutzscheibe eines Kraftfahrzeugs, insbesondere eines Personenkraftwagens, mit einer elektrisch steuerbaren Sonnenblende, die durch das Funktionselement realisiert ist. Während die seitlichen Kanten und die Oberkante eines solchen Funktionselements typischer Weise durch den üblichen Abdeckdruck im Randbereich der Scheibe verdeckt sind, ist die Unterkante im Durchsichtbereich der Scheibe angeordnet und daher nicht maskiert und sichtbar. Diese Unterkante des Funktionselements ist bevorzugt erfindungsgemäß versiegelt. Die optisch unauffällige Versiegelung ist hier besonders vorteilhaft.

Eine elektrisch steuerbare Sonnenblende kann die herkömmliche, mechanisch schwenkbare Sonnenblende überflüssig machen. Dadurch wird im Fahrgastraum des Fahrzeugs Platz gewonnen, das Gewicht des Fahrzeugs reduziert und bei einem starken Abbremsen oder bei Unfall die Gefahr einer Kollision mit der Sonnenblende vermieden. Außerdem kann die elektrische Steuerung der Sonnenblende als komfortabler empfunden werden als das mechanische Herunterklappen.

Die Windschutzscheibe weist eine Oberkante und eine Unterkante sowie zwei zwischen Oberkante und Unterkante verlaufende Seitenkanten auf. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird auch als Dachkante und die Unterkante als Motorkante bezeichnet. Die Kanten des Funktionselements werden entsprechend der Einbaulage der Windschutzscheibe bezeichnet. Die Unterkante des Funktionselements ist also diejenige seiner Seitenkanten, die von der Oberkante der Windschutzscheibe abgewandt ist und zum zentralen Sichtfeld weist. Die Oberkante des Funktionselements ist der Oberkante der Windschutzscheibe zugewandt. Die seitlichen Kanten verlaufen zwischen Oberkante und Unterkante.

Windschutzscheiben weisen ein zentrales Sichtfeld auf, an dessen optische Qualität hohe Anforderungen gestellt werden. Das zentrale Sichtfeld muss eine hohe Lichttransmission aufweisen (typischerweise größer als 70%). Das besagte zentrale Sichtfeld ist insbesondere dasjenige Sichtfeld, das vom Fachmann als Sichtfeld B, Sichtbereich B oder Zone B bezeichnet wird. Das Sichtfeld B und seine technischen Anforderungen sind in der Regelung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge") festgelegt. Dort ist das Sichtfeld B in Anhang 18 definiert.

Das Funktionselement ist dabei oberhalb des zentralen Sichtfelds (Sichtfeld B) angeordnet. Das bedeutet, dass das Funktionselement im Bereich zwischen dem zentralen Sichtfeld und der Oberkante der Windschutzscheibe angeordnet ist. Das Funktionselement muss nicht den gesamten Bereich abdecken, ist aber vollständig innerhalb dieses Bereichs positioniert und ragt nicht in das zentrale Sichtfeld hinein. Anders ausgedrückt weist das Funktionselement einen geringeren Abstand zur Oberkante der Windschutzscheibe auf als der zentrale Sichtbereich. Somit wird die Transmission des zentralen Sichtfelds nicht durch das Funktionselement beeinträchtigt, welches an einer ähnlichen Stelle positioniert ist wie eine klassische mechanische Sonnenblende im heruntergeklappten Zustand.

Die elektrische Steuerung der Sonnenblende erfolgt beispielsweise mittels Knöpfen, Dreh- oder Schiebereglern, die in den Armaturen des Fahrzeugs integriert sind. Es kann aber auch eine Schaltfläche zur Reglung der Sonnenblende in die Windschutzscheibe integriert sein, beispielsweise eine kapazitive Schaltfläche. Alternativ kann die Sonnenblende auch durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid und Sonnenstand gesteuert werden. Auch ein elektrooptisches Funktionselement, welches nicht als Sonnenblende, sondern beispielsweise als Teil eines Head-Up-Displays fungiert, kann grundsätzlich in ähnlicher Weise in seinen elektrooptischen Eigenschaften gesteuert und auf erfindungsgemäße Weise temperiert werden.

In einer bevorzugten Ausgestaltung sind die Unterkanten des Funktionselements und des getönten Bereichs der thermoplastischen Schicht an die Form der Oberkante der Windschutzscheibe angepasst, was ein optisch ansprechenderes Erscheinungsbild bewirkt. Da die Oberkante einer Windschutzscheibe typischerweise gebogen ist, insbesondere konkav gebogen, ist auch die Unterkante des Funktionselements und des getönten Bereichs bevorzugt gebogen ausgestaltet.

Besonders bevorzugt sind die Unterkanten des Funktionselements im Wesentlichen parallel zur Oberkante der Windschutzscheibe ausgebildet. Es ist aber auch möglich, die Sonnenblende aus zwei jeweils geraden Hälften aufzubauen, die in einem Winkel zueinander angeordnet sind und der Form der Oberkante V-förmig angenähert sind.

Das elektrooptische Funktionselement kann in einer vorteilhaften Weiterbildung der Erfindung durch Isolierungslinien in Segmente aufgeteilt sein. Die Isolierungslinien können insbesondere in die Flächenelektroden eingebracht sein, so dass die Segmente der Flächenelektrode elektrisch voneinander isoliert sind. Die einzelnen Segmente sind unabhängig voneinander mit der Spannungsquelle verbunden, so dass sie separat angesteuert werden können. So können verschiedene Bereiche der Sonnenblende unabhängig geschaltet werden. Besonders bevorzugt sind die Isolierungslinien und die Segmente in Einbaulage horizontal angeordnet. Damit kann die Höhe der Sonnenblende vom Benutzer geregelt werden. Der Begriff "horizontal" ist hier breit auszulegen und bezeichnet eine Ausbreitungsrichtung, die zwischen den Seitenkanten der Windschutzscheibe verläuft. Die Isolierungslinien müssen nicht notwendigerweise gerade sein, sondern können auch leicht gebogen sein, bevorzugt angepasst an eine eventuelle Biegung der Oberkante der Windschutzscheibe, insbesondere im Wesentlichen parallel zur Oberkante der Windschutzscheibe. Vertikale Isolierungslinien sind natürlich auch denkbar. Die Isolierungslinien weisen beispielsweise eine Breite von 5 µm bis 500 µm, insbesondere 20 µm bis 200 µm auf. Die Breite der Segmente, also der Abstand benachbarten Isolierungslinien, kann vom Fachmann gemäß den Anforderungen im Einzelfall geeignet gewählt werden. Bereits laminierte Mehrschichtfolien können nachträglich noch mittels Laserablation segmentiert werden.

Bei einer segmentierten Sonnenblende, wie oben beschrieben, kann eine segmentierte Temperierung der aktiven Schicht nur für die tatsächlich angesteuerten Teile des elektrooptischen Funktionselementes erreicht werden. Grundsätzlich ist es aber auch möglich, zusätzlich zu einer segmentierten Flächenelektrode eine unsegmentierte zusätzliche Flächenelektrode (über oder unter der segmentierten Flächenelektrode) als spezielle Heizelektrode vorzusehen. Mit einer solchen Heizelektrode kann die Gesamtfläche der aktiven Schicht des Funktionselementes unabhängig davon temperiert werden, welche Bereiche (Segmente) hiervon tatsächlich elektrisch angesteuert werden.

Die Oberkante und die Seitenkanten des Funktionselements werden in Durchsicht durch die Windschutzscheibe bevorzugt von einem opaken Abdeckdruck verdeckt. Windschutzscheiben weisen typischerweise einen umlaufenden peripheren Abdeckdruck aus einer opaken Emaille auf, der insbesondere dazu dient, den zum Einbau der Windschutzscheibe verwendete Kleber vor UV-Strahlung zu schützen und optisch zu verdecken. Dieser periphere Abdeckdruck wird bevorzugt dazu verwendet, auch die Oberkante und die Seitenkante des Funktionselements zu verdecken, sowie die erforderlichen elektrischen Anschlüsse. Die Sonnenblende ist dann vorteilhaft ins Erscheinungsbild der Windschutzscheibe integriert und lediglich die Unterkante ist potentiell vom Betrachter zu erkennen. Bevorzugt weist sowohl die Außenscheibe als auch die Innenscheibe einen Abdeckdruck auf, so dass die Durchsicht von beiden Seiten gehindert wird.

In einer weiteren bevorzugten Ausgestaltung ist die erfindungsgemäße Verbundscheibe eine Dachscheibe eines Kraftfahrzeugs, deren Transparenz durch das Funktionselement gesteuert werden kann. Das Funktionselement ist bevorzugt in einem Großteil der Dachscheibe angeordnet, insbesondere vollflächig mit Ausnahme eines umlaufenden Randbereichs mit einer Breite von beispielsweise 5 cm bis 20 cm. Auch bei dieser Ausgestaltung kann das Funktionselement strukturiert sein, um beispielsweise die Transparenz im vorderen und hinteren Bereich und/oder im linken und rechten Bereich separat voneinander einstellen zu können.

Die Erfindung erstreckt sich auch auf ein Kraftfahrzeug mit einer erfindungsgemäßen Verbundscheibenanordnung.

Die beiden Schaltkreise der Verbundscheibenanordnung können mit einem Steuergerät zur Steuerung der optischen Eigenschaften des Funktionselements und der Heizung mindestens einer Flächenelektrode elektrisch verbunden werden. Insbesondere können die beiden Schaltkreise der Verbundscheibenanordnung mit einer Bordelektrik verbunden werden zur Steuerung der optischen Eigenschaften des Funktionselements und der Heizung mindestens einer Flächenelektrode durch ein bordeigenes Steuergerät.

Die vorstehend beschriebenen Ausgestaltungen der Erfindung können in beliebiger Weise miteinander kombiniert werden.

Die Erfindung wird nun anhand von Figuren und Ausführungsbeispielen näher erläutert. Die Figuren sind schematische Darstellungen, nicht maßstabsgetreu und schränken die Erfindung in keiner Weise ein. Es zeigen:
- Fig. 1: eine Draufsicht auf eine Ausgestaltung der erfindungsgemäßen Verbundscheibe als Windschutzscheibe mit elektrisch steuerbarer Sonnenblende,
- Fig. 2: einen Querschnitt durch die Windschutzscheibe aus Figur 1 gemäß Schnittlinie x-x',
- Fig. 3: eine vergrößerte Darstellung des Bereichs Z aus Figur 2,
- Fig. 4: eine schematische Darstellung der Beschaltung des Funktionselements gemäß einer Ausgestaltung der Verbundscheibenanordnung von Figur 1,
- Fig. 5: eine schematische Darstellung der Beschaltung des Funktionselements gemäß einer weiteren Ausgestaltung der Verbundscheibenanordnung von Figur 1,
- Fig. 6: ein Ersatzschaltbild der Ausgestaltung der Verbundscheibenanordnung von Figur 4,
- Fig. 7: ein Ersatzschaltbild der alternativen Ausgestaltung der Verbundscheibenanordnung von Figur 5.

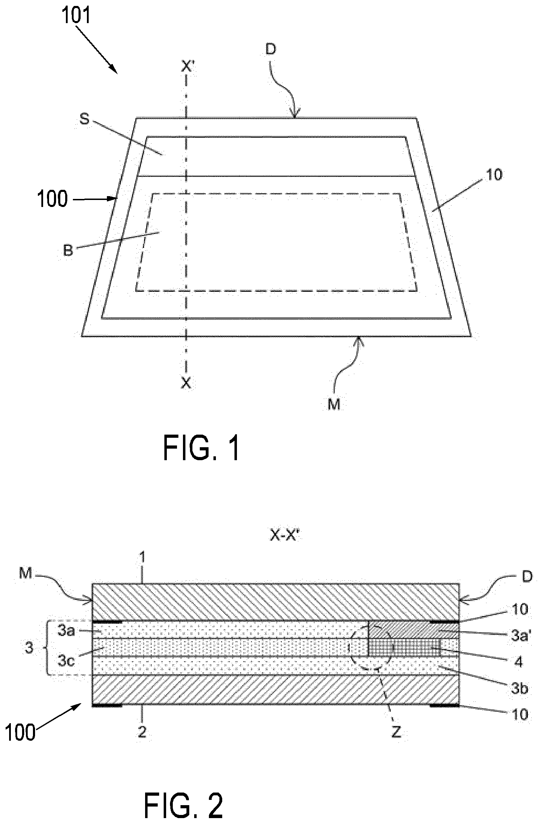

Es wird zunächst Bezug auf die Figuren 1 bis 3 genommen, worin die hier beispielsweise als Windschutzscheibe eines Kraftfahrzeugs ausgebildete Verbundscheibe der erfindungsgemäßen Verbundscheibenanordnung veranschaulicht ist. Die Verbundscheibe ist insgesamt mit der Bezugszahl 100 bezeichnet, die Verbundscheibenanordnung mit der Bezugszahl 101. In den Figuren 1 bis 3 sind die weiteren Bestandteile der Verbundscheibenanordnung 101 neben der Verbundscheibe 100 nicht näher dargestellt. Diese gehen aus den weiteren Figuren hervor.

Demnach umfasst die Verbundscheibe 100 eine Außenscheibe 1 und eine Innenscheibe 2, die über eine thermoplastische Zwischenschicht 3 miteinander verbunden sind. Die Außenscheibe 1 weist beispielsweise eine Dicke von 2,1 mm auf und besteht aus einem grün eingefärbten Kalk-Natron-Glas. Die Innenscheibe 2 weist beispielsweise eine Dicke von 1,6 mm auf und besteht aus einem klaren Kalk-Natron-Glas. Die Verbundscheibe 100 verfügt über eine in Einbaulage dem Dach zugewandte Oberkante D und eine dem Motorraum zugewandte Unterkante M.

Die Verbundscheibe 100 ist mit einer elektrisch steuerbaren Sonnenblende S ausgestattet (siehe Figur 1), die sich in einem Bereich oberhalb eines zentralen Sichtbereichs B (wie in ECE-R43 definiert) befindet. Die Sonnenblende S wird durch ein elektrooptisches Funktionselement 4 gebildet, das hier beispielsweise eine kommerziell erhältliche PDLC-Mehrschichtfolie ist. Das Funktionselement 4 ist in die Zwischenschicht 3 eingelagert. Die Höhe der Sonnenblende S beträgt beispielsweise 21 cm.

Die Zwischenschicht 3 umfasst insgesamt drei thermoplastische Schichten 3a, 3b, 3c, die jeweils durch eine thermoplastische Folie aus Polyvinylbutyral (PVB) mit einer Dicke von 0,38 mm ausgebildet sind. Eine erste thermoplastische Schicht 3a ist mit der Außenscheibe 1 verbunden, eine zweite thermoplastische Schicht 3b ist mit der Innenscheibe 2 verbunden. Eine dazwischenliegende dritte thermoplastische Schicht 3c weist einen Ausschnitt auf, in welchen das zugeschnittene Funktionselement 4 im Wesentlichen passgenau, das heißt an allen Seiten etwa bündig, eingelegt ist. Die dritte thermoplastische Schicht 3c bildet also gleichsam eine Art Passepartout (Rahmen) für das etwa 0,4 mm dicke Funktionselement 4, welches somit rundum in thermoplastisches Material eingekapselt und dadurch geschützt ist.

Die erste thermoplastische Schicht 3a weist einen getönten Bereich 3a' auf, der zwischen dem Funktionselement 4 und der Außenscheibe 1 angeordnet ist. Die Lichttransmission der Verbundscheibe 100 wird dadurch im Bereich der Sonnenblende S (d.h. Funktionselement 4) zusätzlich herabgesetzt und das milchige Aussehen des Funktionselements 4 im diffusiven Zustand abgemildert. Die Ästhetik der Verbundscheibe 100 wird dadurch deutlich ansprechender gestaltet. Die erste thermoplastische Schicht 3a weist im getönten Bereich 3a' beispielsweise eine durchschnittliche Lichttransmission von 30% auf, womit gute Ergebnisse erzielt werden. Der getönte Bereich 3a' kann homogen getönt sein. Oft ist es jedoch optisch ansprechender, wenn die Tönung in Richtung der Unterkante des Funktionselements 4 geringer wird, so dass der getönte Bereich 3a' und der ungetönte Bereich fließend ineinander übergehen. Im dargestellten Fall sind die Unterkanten des getönten Bereichs 3a' und des Funktionselements 4 bündig angeordnet. Dies ist aber nicht notwendigerweise der Fall. Es ist ebenso möglich, dass der getönte Bereich 3a' über das Funktionselement 4 übersteht oder dass umgekehrt das Funktionselement 4 über den getönten Bereich 3a' übersteht.

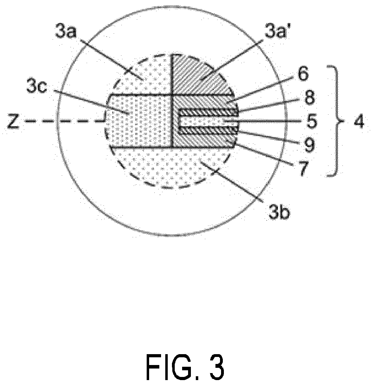

Das elektrisch steuerbare Funktionselement 4 ist eine PDLC-Mehrschichtfolie, bestehend aus einer aktiven Schicht 5 zwischen zwei Flächenelektroden 8, 9 und zwei Trägerfolien 6, 7 (siehe Figur 3). Die aktive Schicht 5 enthält eine Polymermatrix mit darin dispergierten Flüssigkristallen, die sich in Abhängigkeit der an die Flächenelektroden 8, 9 angelegten elektrischen Spannung ausrichten, wodurch die optischen Eigenschaften geregelt werden können. Die Trägerfolien 6, 7 bestehen aus PET und weisen eine Dicke von beispielsweise ca. 0,2 mm auf. Die Trägerfolien 6, 7 sind mit einer zur aktiven Schicht 5 weisenden Beschichtung aus ITO mit einer Dicke von etwa 100 nm versehen, welche die Flächenelektroden 8, 9 ausbilden. Die Flächenelektroden 8, 9 sind durch in den Figuren 1 bis 3 nicht dargestellte Sammelleiter (Busbars), die beispielweise durch einen silberhaltigen Siebdruck gefertigt sind, und nicht dargestellte Verbindungskabel mit einer Bordelektrik verbindbar. Durch Beaufschlagen der beiden Flächenelektroden 8, 9 mit einer Schaltspannung (Wechselspannung) kann die Lichttransmission des Funktionselements 4 verändert werden, d.h. die Durchlässigkeit der Sonnenblende S für Licht kann gezielt verändert werden.

Die Verbundscheibe 100 weist, wie üblich, einen umlaufenden peripheren Abdeckdruck 10 auf, der durch eine opake Emaille auf den innenraumseitigen Oberflächen (in Einbaulage dem Innenraum des Fahrzeugs zugewandt) der Außenscheibe 1 und der Innenscheibe 2 ausgebildet ist. Der Abstand des Funktionselements 4 zur Oberkante D und den Seitenkanten der Verbundscheibe 100 ist kleiner als die Breite des Abdeckdrucks 10, so dass die Seitenkanten des Funktionselements 4 - mit Ausnahme der zum zentralen Sichtfeld B weisenden Seitenkante - durch den Abdeckdruck 10 verdeckt sind. Auch die nicht dargestellten elektrischen Anschlüsse werden sinnvollerweise im Bereich des Abdeckdrucks 10 angebracht und sind somit versteckt.

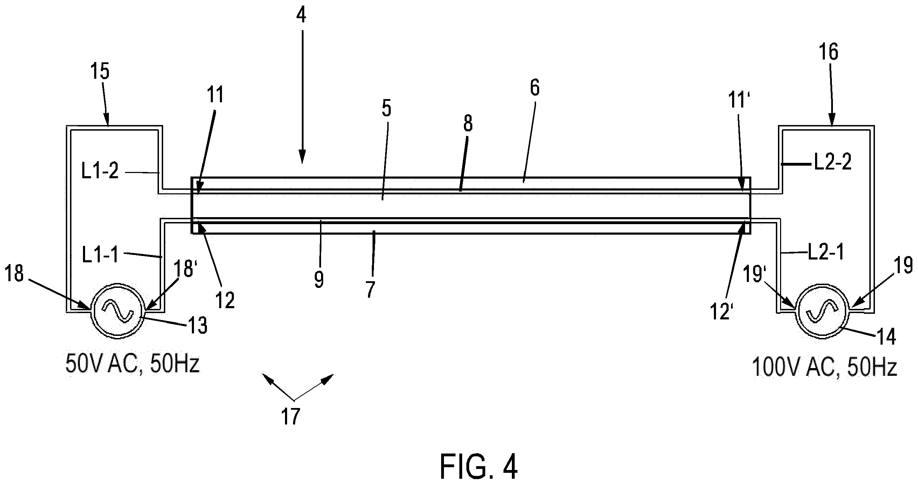

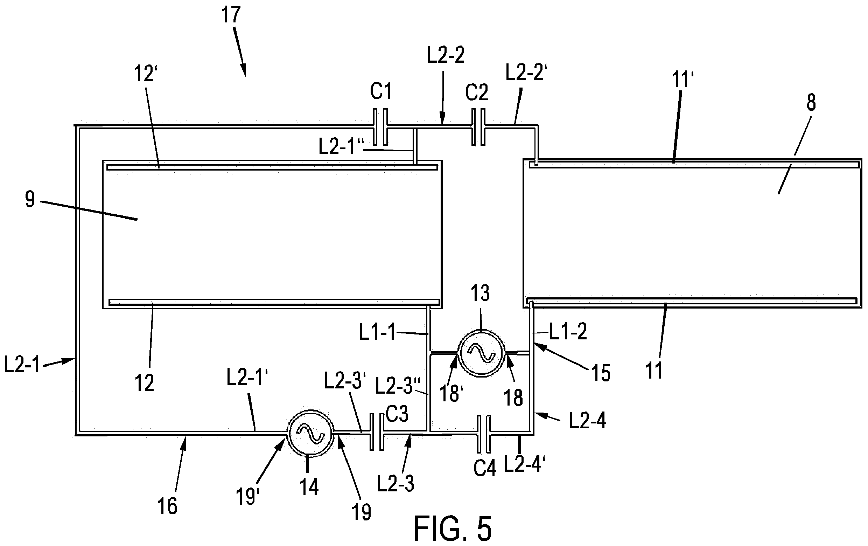

Es wird nun Bezug auf die Figuren 4 und 5 genommen, worin anhand schematischer Darstellungen zwei alternative Beschaltungen des Funktionselements 4 veranschaulicht sind. In den Figuren 4 und 5 ist von der Verbundscheibe 100 der Verbundscheibenanordnung 101 von Figur 1 jeweils nur das Funktionselement 4 in schematischer Weise veranschaulicht. Figur 5 zeigt das Funktionselement 4 in einem "aufgeklappten" Zustand, bei dem der Betrachter auf eine jeweilige Fläche (z.B. Innenfläche) der Flächenelektroden 8, 9 blickt. Die aktive Schicht 5 ist nicht dargestellt.

Die beiden Flächenelektroden 8, 9 weisen jeweils eine Rechteckform auf. Die erste Flächenelektrode 8 verfügt über zwei in der Ebene der ersten Flächenelektrode 8 einander gegenüberliegende Busbars 11, 11', die hier beispielsweise an den einander gegenüberliegenden Längsseiten der ersten Flächenelektrode 8 angeordnet sind. In entsprechender Weise verfügt die zweite Flächenelektrode 9 über zwei in der Ebene der zweiten Flächenelektrode 9 einander gegenüberliegende Busbars 12, 12', die hier beispielsweise an den einander gegenüberliegenden Längsseiten der zweiten Flächenelektrode 9 angeordnet sind. Die Busbars 11, 11', 12, 12' können auf der Außenfläche und/oder Innenfläche der jeweils zugehörigen Flächenelektrode 8, 9 angeordnet sein. Die Busbars 11, 11', 12, 12' dienen zum Beaufschlagen des Funktionselements 4 mit einer Spannung wie im Weiteren näher erläutert wird. In den Ausgestaltungen der Figuren 4 und 5 ist das Funktionselement 4 jeweils gleich ausgebildet, lediglich dessen Beschaltung ist verschieden.

In der erfindungsgemäßen Verbundscheibenanordnung 101 dienen die Flächenelektroden 8, 9 nicht nur zum Steuern der optischen Eigenschaften des Funktionselements 4, sondern mindestens eine der Flächenelektroden 8, 9 dient auch zum Erwärmen der aktiven Schicht 5 auf eine vorbestimmte bzw. vorbestimmbare Temperatur, indem die mindestens eine Flächenelektrode 8, 9 durch elektrische Widerstandsheizung erwärmt wird. Die Verbundscheibenanordnung 101 weist zu diesem Zweck eine erste Spannungsquelle 13 und eine zweite Spannungsquelle 14 auf, wobei die zweite Spannungsquelle 14 von der ersten Spannungsquelle 13 verschieden ist. Die erste Spannungsquelle 13 und die zweite Spannungsquelle 14 stellen jeweils eine elektrische Wechselspannung (AC) zur Verfügung.

Das Funktionselement 4 ist so ausgelegt, dass dessen optische Eigenschaften (z.B. Transmission von Licht durch die aktive Schicht 5) durch eine elektrische Wechselspannung, jedoch nicht durch eine elektrische Gleichspannung, gesteuert werden. Es handelt es sich hierbei um ein PDLC-Funktionselement 4 mit einer aktiven Schicht 5 auf Basis von Flüssigkristallen. Das Funktionselement 4 stellt gleichsam ein spannungsgesteuertes Lichtventil dar, wobei dessen optische Eigenschaften in Abhängigkeit der angelegten Wechselspannung verändert werden können.

Sei zunächst Figur 4 betrachtet. Darin gezeigt ist das Funktionselement 4 der Verbundscheibe 100 von Figur 1, bestehend aus der aktiven Schicht 5, den beiden Flächenelektroden 8, 9 und den beiden Trägerfolien 6, 7. Das Funktionselement 4 ist in einem Querschnitt senkrecht zu den Flächenelektroden 8,9 gezeigt. Die Busbars 11, 11', 12, 12' der Flächenelektrode 8, 9 sind nicht näher dargestellt.

Die Beschaltung des Funktionselements 4 erfolgt durch zwei Schaltkreise 15, 16, die Teil einer Schaltung 17 sind. Die beiden Schaltkreise 15, 16, sind mit der Bordelektrik verbunden bzw. verbindbar, insbesondere zur Verbindung mit einem bordeigenen Steuergerät (Controller) zur Steuerung der Sonnenblende S.

Ein erster Schaltkreis 15 umfasst eine erste Spannungsquelle 13 sowie die beiden elektrischen Leitungen L1-1 und L1-2. Die elektrische Leitung L1-1 verbindet den einen Spannungsanschluss 18' der ersten Spannungsquelle 13 mit der Busbar 12 der unteren Flächenelektrode 9 elektrisch leitend, die andere Leitung L1-2 verbindet den anderen Spannungsanschluss 18 der ersten Spannungsquelle 13 mit der Busbar 11 der oberen Flächenelektrode 8 elektrisch leitend. Die beiden Busbars 11, 12 liegen senkrecht zur Ebene der aktiven Schicht 5 einander gegenüber.

Ein zweiter Schaltkreis 16 umfasst die zweite Spannungsquelle 14 sowie die beiden elektrischen Leitungen L2-1 und L2-2. Die elektrische Leitung L2-1 verbindet den einen Spannungsanschluss 19' der zweiten Spannungsquelle 14 mit der Busbar 12' der unteren Flächenelektrode 9 elektrisch leitend, die andere Leitung L2-2 verbindet den anderen Spannungsanschluss 19 der zweiten Spannungsquelle 14 mit der Busbar 11' der oberen Flächenelektrode 8 elektrisch leitend. Die beiden Busbars 11', 12' liegen senkrecht zur Ebene der aktiven Schicht 5 einander gegenüber.

Somit ist die erste Spannungsquelle 13 an die beiden Busbars 11, 12 auf der einen Längsseite des Funktionselements 4 und die zweite Spannungsquelle 14 an die beiden Busbars 11', 12' auf der anderen Längsseite des Funktionselements 4 elektrisch leitend angeschlossen.

Beide Spannungsquellen 13, 14 stellen eine elektrische Wechselspannung zur Verfügung. Die erste Spannungsquelle 13 hat einen niedrigeren Maximalwert der Spannung als die zweite Spannungsquelle 14. Die Frequenzen der Wechselspannungen der beiden Spannungsquellen 13, 14 sind gleich. Zudem sind die Wechselspannungen in Phase. Beispielsweise stellt die erste Spannungsquelle 13 eine Wechselspannung (AC) mit einem Maximalwert der Spannung von 50 V und einer Frequenz von 50 Hz bereit, die zweite Spannungsquelle 14 eine Wechselspannung (AC) mit einem Maximalwert der Spannung von 100 V und einer Frequenz von 50 Hz.

Die Beaufschlagung der oberen Flächenelektrode 8 mit einer Wechselspannung von 50 V auf der einen Seite und mit einer Wechselspannung von 100 V auf der anderen Seite führt zu einem Spannungsabfall in der Ebene der ersten Flächenelektrode 8 von der einen Busbar 11' zur anderen Busbar 11. Hierdurch wird eine elektrische Widerstandsheizung der oberen Flächenelektrode 8 bewirkt. In entsprechender Weise führt die Beaufschlagung der unteren Flächenelektrode 9 mit einer Wechselspannung von 50 V auf der einen Seite und mit einer Wechselspannung von 100 V auf der anderen Seite zu einem Spannungsabfall in der Ebene der zweiten Flächenelektrode 9 von der einen Busbar 12' zur anderen Busbar 12. Hierdurch wird eine elektrische Widerstandsheizung der unteren Flächenelektrode 9 bewirkt. Somit werden beiden Flächenelektroden 8, 9 elektrisch beheizt, wodurch die aktive Schicht 5 des Funktionselements 4 erwärmt wird.

Zudem können durch die Beaufschlagung mit zwei verschiedenen Wechselspannungen die optischen Eigenschaften der aktiven Schicht 5 in gewünschter Weise eingestellt werden. Senkrecht zur Ebene der aktiven Schicht 5 tritt kein Spannungsabfall auf, d.h. in senkrechter Sicht durch die aktive Schicht 5 haben die beiden Flächenelektroden 8, 9 lokal jeweils eine selbe Spannung, welche sich in der Ebene der aktiven Schicht 5 in Richtung von der einen Busbar 11 zur anderen Busbar 11' (bzw. in Richtung von der einen Busbar 12 zur anderen Busbar 12') vergrößert. Die optischen Eigenschaften der aktiven Schicht 5 können somit durch eine lokal konstante Spannung, d.h. ohne Spannungsabfall über die aktive Schicht 5, gesteuert werden. In der Schaltung 17 von Figur 4 dienen somit die erste Spannungsquelle 13 und die zweite Spannungsquelle 14 gemeinsam sowohl zum Steuern der optischen Eigenschaften des Funktionselements 4 als auch zum Heizen der aktiven Schicht 5.

Vorzugsweise sollten die beiden Maximalwerte der Wechselspannungen der beiden Spannungsquellen 13, 14 in der Praxis so gewählt werden, dass die nachfolgend beschriebenen Bedingungen gemeinsam erfüllt sind. So ist die Differenz der (Maximal-)Spannungswerte so zu wählen, dass kein elektrischer Kurzschluss (Durchschlag), insbesondere durch die aktive Schicht 5, erfolgt. Zudem gilt, dass je höher die an der aktiven Schicht 5 anliegende Spannung ist, desto geringer ist eine durch Streulicht verursachte Trübung (Haze), solange keine für diesen Effekt relevante Schwellspannung erreicht wird, ab welcher die Trübung wieder zunimmt. Somit wären die Spannungswerte so zu wählen, dass die Trübung möglichst klein wird. Zudem sollten die Spannungswerte so gewählt werden, dass ein ausreichend hoher Spannungsabfall in der Ebene der Flächenelektroden 8, 9 für die Widerstandsheizung auftritt. Für kommerziell verfügbare PDLC-Funktionselemente 4 werden Nominalspannungen angegeben, bei denen diese betrieben werden sollen. Um obige Bedingungen zu erfüllen, liegen die Maximalspannungen der beiden Wechselspannungen bei einem selben PDLC-Funktionselement 4 vorzugsweise im Bereich von 80% bis 150% der ausgewiesenen Nominalspannung des PDLC-Funktionselements 4.

Es wird nun Bezug auf Figur 5 genommen, worin anhand einer schematischen Darstellung eine alternative Beschaltung des ansonsten gleichen Funktionselements 4 der Verbundscheibe 100 von Figur 1 veranschaulicht ist. Wie bereits ausgeführt, ist das Funktionselement 4 in einem "aufgeklappten" Zustand gezeigt, bei dem die beiden Flächenelektroden 8, 9 nebeneinander angeordnet sind. Die aktive Schicht 5 ist nicht dargestellt. Beispielsweise ist die jeweilige Innenfläche der Flächenelektroden 8, 9 dem Betrachter zugewandt.

Wie in der Ausgestaltung von Figur 4 erfolgt die Beschaltung des Funktionselements 4 durch zwei Schaltkreise 15, 16, die hier Teil einer gemeinsamen Schaltung 17 sind. Die beiden Schaltkreise 15, 16, sind mit der Bordelektrik verbunden bzw. verbindbar, insbesondere zur Verbindung mit einem Steuergerät (Controller) zur Steuerung der Sonnenblende S.

Ein erster Schaltkreis 15 umfasst eine erste Spannungsquelle 13 sowie die beiden elektrischen Leitungen L1-1 und L1-2. Die elektrische Leitung L1-1 ist mit der Busbar 12 der unteren Flächenelektrode 9 elektrisch leitend verbunden, die andere Leitung L1-2 ist mit der Busbar 11 der oberen Flächenelektrode 8 elektrisch leitend verbunden. Die beiden Busbars 11, 12 liegen senkrecht zur Ebene der aktiven Schicht 5 einander gegenüber. Somit ist die erste Spannungsquelle 13 an die beiden Busbars 11, 12 auf der einen Längsseite des Funktionselements 4 elektrisch leitend angeschlossen.

Ein zweiter Schaltkreis 16 umfasst eine zweite Spannungsquelle 14 sowie vier elektrische Leitungen L2-1, L2-2, L2-3 und L2-4, die sich jeweils aus mehreren Leitungsabschnitten zusammensetzen.

Die elektrische Leitung L2-1 verbindet den einen Spannungsanschluss 19' der zweiten Spannungsquelle 14 mit der Busbar 12' der unteren Flächenelektrode 9 elektrisch leitend. Die elektrische Leitung L2-1 setzt sich, ausgehend von der zweiten Spannungsquelle 14, in Serie aus dem Leitungsabschnitt L2-1' und dem Leitungsabschnitt L2-1" zusammen. Im Leitungsabschnitt L2-1' befindet sich ein Kondensator (Kapazität) C1.

Die elektrische Leitung L2-2 verbindet denselben Spannungsanschluss 19' der zweiten Spannungsquelle 14 mit der Busbar 11' der oberen Flächenelektrode 8 elektrisch leitend. Die elektrische Leitung L2-2 setzt sich, ausgehend von der zweiten Spannungsquelle 14, in Serie aus dem Leitungsabschnitt L2-1' und dem Leitungsabschnitt L2-2' zusammen. Im Leitungsabschnitt L2-1' befindet sich der Kondensator (Kapazität) C1. In Serie verbunden mit dem Kondensator C1 befindet sich im Leitungsabschnitt 2-2' ein weiterer Kondensator (Kapazität) C2.

Die elektrische Leitung L2-3 verbindet den anderen Spannungsanschluss 19 der zweiten Spannungsquelle 14 mit der Busbar 12 der unteren Flächenelektrode 9 elektrisch leitend. Die elektrische Leitung L2-3 setzt sich, ausgehend von der zweiten Spannungsquelle 14, in Serie aus dem Leitungsabschnitt L2-3', dem Leitungsabschnitt L2-3" sowie der Leitung L1-1 zusammen. Im Leitungsabschnitt L2-3' befindet sich ein Kondensator (Kapazität) C3.

Die elektrische Leitung L2-4 verbindet denselben Spannungsanschluss 19 der zweiten Spannungsquelle 14 mit der Busbar 11 der oberen Flächenelektrode 8 elektrisch leitend. Die elektrische Leitung L2-4 setzt sich, ausgehend von der zweiten Spannungsquelle 14, in Serie aus dem Leitungsabschnitt L2-3', dem Leitungsabschnitt L2-4' sowie der Leitung L1-2 zusammen. Im Leitungsabschnitt L2-4' befindet sich in Serie mit dem Kondensator C4 ein weiterer Kondensator (Kapazität) C4.

Somit sind die beiden Spannungsanschlüsse der zweiten Spannungsquelle 14 jeweils an die beiden Busbars 11, 11' der oberen Flächenelektrode 8 sowie an die beiden Busbars 12, 12' der unteren Flächenelektrode 9 elektrisch leitend angeschlossen.

In der Schaltung 17 von Figur 5 dient die erste Spannungsquelle 13 nur zum Steuern der Lichttransmission des Funktionselements 4. Die zweite Spannungsquelle 14 dient nur zum Heizen der aktiven Schicht 5. Beide Spannungsquellen 13, 14 stellen jeweils eine elektrische Wechselspannung zur Verfügung, wobei die Frequenz der Wechselspannung der ersten Spannungsquelle 13 niedriger ist als die Frequenz der Wechselspannung der zweiten Spannungsquelle 14. Zudem ist der Maximalwert der Wechselspannung der ersten Spannungsquelle 13 niedriger als jener der zweiten Spannungsquelle 14. Aufgrund der Beschaltung fällt die Wechselspannung der ersten Spannungsquelle 13 nur über die aktive Schicht 5 (senkrecht zur Ebene der aktiven Schicht 5) ab, wodurch die optische Transparenz der aktiven Schicht 5 steuerbar ist. Beispielsweise entspricht der Spannungswert der Nominalspannung eines kommerziell verfügbaren PDLC-Funktionselements 4. Die Wechselspannung der zweiten Spannungsquelle 14 fällt jeweils nur in den Ebenen der Flächenelektroden 8, 9 ab, sodass diese durch elektrische Widerstandsheizung heizbar sind.

Die Kapazitätswerte der Kondensatoren C1-C4 sind so ausgelegt, dass sie jeweils als Hochpassfilter für die höhere Frequenz der Wechselspannung der zweiten Spannungsquelle 14 wirken, jedoch die Wechselspannung mit niedrigerer Frequenz der ersten Spannungsquelle 13 blockieren. Somit kann in vorteilhafter Weise vermieden werden, dass die Steuerung der optischen Eigenschaften der aktiven Schicht 5 durch die Wechselspannung der zweiten Spannungsquelle 14 zur Heizung der Flächenelektroden 8, 9 beeinträchtigt wird. Hierdurch ist eine selektive Steuerung der Widerstandsheizung der Flächenelektroden 8, 9 sowie der optischen Transparenz der aktiven Schicht 5 ermöglicht.

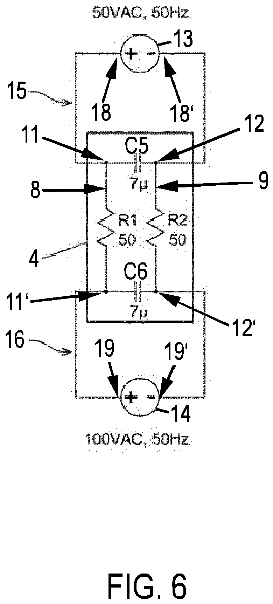

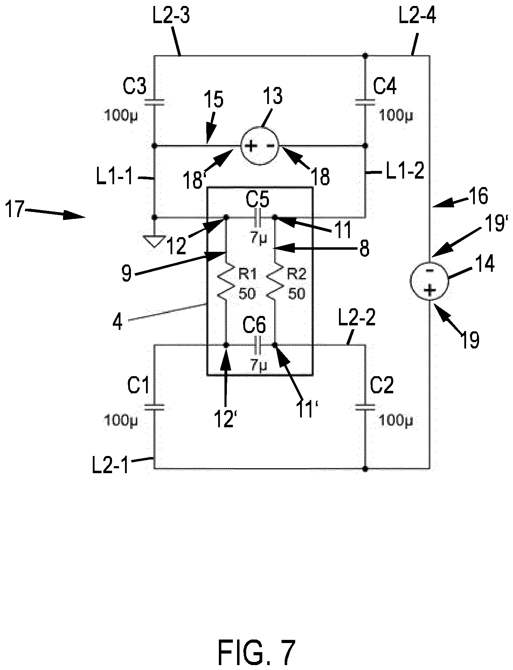

In den Figuren 6 und 7 ist jeweils ein Ersatzschaltbild der Verbundscheibenanordnung der Figuren 4 und 5 gezeigt.

Sei zunächst Figur 6 betrachtet, welches sich auf die Ausgestaltung von Figur 4 bezieht. Für das Funktionselement 4 sind die beiden Flächenelektroden 8, 9 jeweils als elektrischer Widerstand R1, R2 (hier beispielsweise jeweils 50 Ohm) repräsentiert. Die Anordnung der beiden Flächenelektroden 8, 9 mit zwischenliegender aktiver Schicht 5 ist durch die beiden Kapazitäten C5, C6 (hier beispielsweise jeweils 7 µF) realisiert. Im ersten Schaltkreis 15 befindet sich die erste Spannungsquelle 13, welche mit beiden Spannungsanschlüssen 18, 18' die beiden Flächenelektroden 8, 9 auf der einen Seite des Funktionselements 4 elektrisch kontaktiert. Im zweiten Schaltkreis 16 befindet sich die zweite Spannungsquelle 14, welche mit beiden Spannungsanschlüssen 19, 19' die beiden Flächenelektroden 8, 9 auf der anderen Seite des Funktionselements 4 elektrisch kontaktiert.

In Figur 7 ist das Ersatzschatzbild der Ausgestaltung von Figur 5 gezeigt. Das Funktionselement 4 ist wie in Figur 6 ausgebildet. Im ersten Schaltkreis 15 befindet sich die erste Spannungsquelle 13, welche mit beiden Spannungsanschlüssen 18, 18' die beiden Flächenelektroden 8, 9 auf der einen Seite des Funktionselements 4 elektrisch kontaktiert. Im zweiten Schaltkreis 16 befindet sich die zweite Spannungsquelle 14, welche mit beiden Spannungsanschlüssen 19, 19' jeweils die beiden Flächenelektroden 8, 9 elektrisch kontaktiert. Bei dieser Ausgestaltung werden beiden Flächenelektroden 8, 9 geheizt. Denkbar wäre, nur eine der beiden Flächenelektroden 8, 9 zu heizen, zu welchem Zweck die Leitungen L2-2 und L2-4 weggelassen werden können (Heizung nur der Flächenelektrode 9) oder alternativ die Leitungen L2-1 und L2-3 weggelassen werden können (Heizung nur der Flächenelektrode 8).

Die beiden Ausgestaltungen der erfindungsgemäßen Scheibenanordnung 101 der Figuren 4 und 5 ermöglichen eine gezielte Heizung der aktiven Schicht 5 des Funktionselements 4 durch Widerstandsheizung mindestens einer Flächenelektrode 8, 9, so dass deren optische Eigenschaften gut steuerbar sind.

Vorzugsweise ist innerhalb der Verbundscheibe 100 und angrenzend an das elektrooptische Funktionselement 4 ein Temperaturfühler von an sich bekannter Bauart vorgesehen. Dessen Signal gibt die Ist-Temperatur der aktiven Schicht 5 des Funktionselements 4 wieder, welches vorzugsweise als Eingangsgröße für die Steuerung der Heizung der mindestens einen Flächenelektrode 8, 9 dient.

Wie sich aus vorstehenden Ausführungen ergibt, schafft die Erfindung eine einfach zu realisierende Scheibenanordnung, bei der die aktive Schicht eines Funktionselements durch zwei Wechselspannungen steuer- und heizbar ist.

### Bezugszeichenliste

- 1: Außenscheibe
- 2: Innenscheibe
- 3: thermoplastische Zwischenschicht
- 3a: erste thermoplastische Schicht
- 3a': getönter Bereich
- 3b: zweite thermoplastische Schicht
- 3c: dritte thermoplastische Schicht 3
- 4: Funktionselement
- 5: aktive Schicht
- 6: erste Trägerfolie
- 7: zweite Trägerfolie
- 8: erste Flächenelektrode
- 9: zweite Flächenelektrode
- 10: Abdeckdruck
- 11: erste Busbar der ersten Flächenelektrode
- 11': zweite Busbar der ersten Flächenelektrode
- 12: erste Busbar der zweiten Flächenelektrode
- 12': zweite Busbar der zweiten Flächenelektrode
- 13: erste Spannungsquelle
- 14: zweite Spannungsquelle
- 15: erster Schaltkreis
- 16: zweiter Schaltkreis
- 17: Schaltung
- 18: erster Spannungsausgang der ersten Spannungsquelle
- 18': zweiter Spannungsausgang der ersten Spannungsquelle
- 19: erster Spannungsausgang der zweiten Spannungsquelle
- 19': zweiter Spannungsausgang der zweiten Spannungsquelle

- 100: Verbundscheibe
- 101: Verbundscheibenanordnung

- B: Sichtbereich
- D: Scheibenoberkante
- M: Scheibenunterkante
- S: Sonnenblende
- X-X': Schnittlinie

## Patentansprüche

1. Verbundscheibenanordnung (101), welche umfasst:
- eine Verbundscheibe (100) mit einer Außenscheibe (1) und einer Innenscheibe (2), die über eine thermoplastische Zwischenschicht (3) miteinander verbunden sind, wobei ein Funktionselement (4) in die Zwischenschicht (3) eingelagert ist, das eine aktive Schicht (5) auf Basis von Flüssigkristallen umfasst, deren optische Eigenschaften durch eine erste Flächenelektrode (8) und eine zweite Flächenelektrode (9) steuerbar sind, wobei die erste Flächenelektrode (8) einen ersten und einen zweiten Anschluss (11, 11') aufweist, und wobei die zweite Flächenelektrode (9) einen ersten und einen zweiten Anschluss (12, 12') aufweist,
- ein erster Schaltkreis (15), der eine erste Spannungsquelle (13) mit einem ersten und zweiten Spannungsausgang (18, 18') zum Bereitstellen einer ersten Wechselspannung aufweist,
- ein zweiter Schaltkreis (16), der eine zweite Spannungsquelle (14) mit einem ersten und zweiten Spannungsausgang (19, 19') zum Bereitstellen einer zweiten Wechselspannung aufweist, wobei eine Maximalspannung der zweiten Wechselspannung größer ist als eine Maximalspannung der ersten Wechselspannung und die beiden Wechselspannungen eine gleiche Frequenz haben,
wobei der erste Spannungsausgang (18) der ersten Spannungsquelle (13) nur mit dem ersten Anschluss (11) der ersten Flächenelektrode (8) elektrisch leitend verbunden ist und der zweite Spannungsausgang (18') der ersten Spannungsquelle (13) nur mit dem ersten Anschluss (12) der zweiten Flächenelektrode (9) elektrisch leitend verbunden ist, und
wobei der erste Spannungsausgang (19) der zweiten Spannungsquelle (14) nur mit dem zweiten Anschluss (11') der ersten Flächenelektrode (8) elektrisch leitend verbunden ist und der zweite Spannungsausgang (19') der zweiten Spannungsquelle (14) nur mit dem zweiten Anschluss (12') der zweiten Flächenelektrode (9) elektrisch leitend verbunden ist.

2. Verbundscheibenanordnung (101) nach Anspruch 1, bei welcher der erste und zweite Anschluss (11, 11') der ersten Flächenelektrode (8) in der Ebene der ersten Flächenelektrode (8) einander gegenüberliegend angeordnet sind, und/oder der erste und zweite Anschluss (12, 12') der zweiten Flächenelektrode (9) in der Ebene der zweiten Flächenelektrode (9) einander gegenüberliegend angeordnet sind.

3. Verbundscheibenanordnung (101) nach Anspruch 2, bei welcher ein Abstand zwischen dem ersten und zweiten Anschluss (11, 11') der ersten Flächenelektrode (8) gleich ist zu einem Abstand zwischen dem ersten und zweiten Anschluss (12, 12') der zweiten Flächenelektrode (9).

4. Verbundscheibenanordnung (101), welche umfasst:
- eine Verbundscheibe (100) mit einer Außenscheibe (1) und einer Innenscheibe (2), die über eine thermoplastische Zwischenschicht (3) miteinander verbunden sind, wobei ein Funktionselement (4) in die Zwischenschicht (3) eingelagert ist, das eine aktive Schicht (5) auf Basis von Flüssigkristallen umfasst, deren optische Eigenschaften durch eine erste Flächenelektrode (8) und eine zweite Flächenelektrode (9) steuerbar sind,
- ein erster Schaltkreis (15), der eine erste Spannungsquelle (13) mit einem ersten und zweiten Spannungsausgang (18, 18') zum Bereitstellen einer ersten Wechselspannung aufweist,
- ein zweiter Schaltkreis (16), der eine zweite Spannungsquelle (14) mit einem ersten und zweiten Spannungsausgang (19, 19') zum Bereitstellen einer zweiten Wechselspannung aufweist, wobei die Frequenz der zweiten Spannungsquelle (14) größer ist als die Frequenz der ersten Spannungsquelle (13),
wobei der erste Spannungsausgang (18) der ersten Spannungsquelle (13) nur mit einem ersten Anschluss (11) der ersten Flächenelektrode (8) elektrisch leitend verbunden ist und der zweite Spannungsausgang (18') der ersten Spannungsquelle (13) nur mit einem ersten Anschluss (12) der zweiten Flächenelektrode (9) elektrisch leitend verbunden ist,
wobei der erste Spannungsausgang (19) der zweiten Spannungsquelle (14) unter Zwischenschaltung eines Hochpassfilters mit dem mit der ersten Spannungsquelle (13) verbundenen ersten Anschluss (11) oder einem weiteren ersten Anschluss der ersten Flächenelektrode (8) elektrisch leitend verbunden ist und der zweite Spannungsausgang (19') der zweiten Spannungsquelle (14) unter Zwischenschaltung eines Hochpassfilters mit einem zweiten Anschluss (11') der ersten Flächenelektrode (8) elektrisch leitend verbunden ist, und/oder wobei der erste Spannungsausgang (19) der zweiten Spannungsquelle (14) unter Zwischenschaltung eines Hochpassfilters mit dem mit der ersten Spannungsquelle (13) verbundenen ersten Anschluss (12) oder einem weiteren ersten Anschluss der zweiten Flächenelektrode (9) elektrisch leitend verbunden ist und der zweite Spannungsausgang (19') der zweiten Spannungsquelle (14) unter Zwischenschaltung eines Hochpassfilters mit einem zweiten Anschluss (12') der zweiten Flächenelektrode (9) elektrisch leitend verbunden ist,
und wobei die Hochpassfilter jeweils so ausgebildet sind, dass sie für die höher-frequente Wechselspannung der zweiten Spannungsquelle durchlässig sind und die niedriger-frequente Wechselspannung der ersten Spannungsquelle blockieren.

5. Verbundscheibenanordnung (101) nach Anspruch 4, bei welcher die erste Flächenelektrode (8) genau einen ersten Anschluss (11) und genau einen zweiten Anschluss (11') aufweist und/oder die zweite Flächenelektrode (9) genau einen ersten Anschluss (12) und genau einen zweiten Anschluss (12') aufweist.

6. Verbundscheibenanordnung (101) nach Anspruch 5, bei welcher der erste und zweite Anschluss (11, 11') der ersten Flächenelektrode (8) in der Ebene der ersten Flächenelektrode (8) einander gegenüberliegend angeordnet sind, und/oder der erste und zweite Anschluss (12, 12') der zweiten Flächenelektrode (9) in der Ebene der zweiten Flächenelektrode (9) einander gegenüberliegend angeordnet sind.

7. Verbundscheibenanordnung (101) nach Anspruch 6, bei welcher ein Abstand zwischen dem ersten und zweiten Anschluss (11, 11') der ersten Flächenelektrode (8) gleich ist zu einem Abstand zwischen dem ersten und zweiten Anschluss (12, 12') der zweiten Flächenelektrode (9).

8. Verbundscheibenanordnung (101) einem der Ansprüche 1 bis 7, bei welcher die Anschlüsse (11, 11', 12, 12') der Flächenelektroden (8, 9) jeweils in Form langgestreckter Anschlüsse, insbesondere Busbars, an gegenüberliegenden Kanten des Funktionselements (4) ausgebildet sind.

9. Verbundscheibenanordnung (101) nach einem der Ansprüche 1 bis 8, bei welcher die Flächenelektroden (8, 9) jeweils rechteckförmig ausgebildet sind.

10. Verbundscheibenanordnung (101) nach Anspruch 8, bei welcher die langgestreckten Anschlüsse (11, 11', 12, 12') an den Längskanten des Funktionselements (4) angeordnet sind.

11. Verbundscheibenanordnung (101) nach einem der Ansprüche 1 bis 10, bei welcher die Flächenelektroden (8, 9) so erwärmbar sind, dass die aktive Schicht (5) des Funktionselements (4) eine Temperatur im Bereich oberhalb +5°C aufweist.

12. Verbundscheibenanordnung (101) nach einem der vorangehenden Ansprüche 1 bis 11, mit einem Temperatursensor im oder nahe dem elektrooptischen Funktionselement (4) innerhalb der Zwischenschicht (3).

13. Verbundscheibenanordnung (101) nach einem der vorangehenden Ansprüche 1 bis 12, bei welcher die Verbundscheibe als Windschutzscheibe oder Dachverglasung eines Kraftfahrzeugs ausgebildet ist.

14. Verbundscheibenanordnung (101) nach einem der vorangehenden Ansprüche 1 bis 13, bei welcher das Funktionselement (4) ein PDLC-Funktionselement ist.

15. Kraftfahrzeug mit einer Verbundscheibenanordnung (101) nach einem der Ansprüche 1 bis 14.

## Claims

1. Laminated pane arrangement (101), which comprises:
- a laminated pane (100) with an outer pane (1) and an inner pane (2) that are joined to one another via a thermoplastic intermediate layer (3), wherein a functional element (4) is embedded in the intermediate layer (3), which functional element includes an active layer (5) based on liquid crystals, whose optical properties can be controlled by a first flat electrode (8) and a second flat electrode (9), wherein the first flat electrode (8) has a first and a second connection (11, 11'), and wherein the second flat electrode (9) has a first and a second connection (12, 12'),
- a first circuit (15), which has a first voltage source (13) with a first and second voltage output (18, 18') for providing a first AC voltage,
- a second circuit (16), which has a second voltage source (14) with a first and second voltage output (19, 19') for providing a second AC voltage, wherein a maximum voltage of the second AC voltage is greater than a maximum voltage of the first AC voltage and the two AC voltages have the same frequency,
wherein the first voltage output (18) of the first voltage source (13) is electrically conductively connected only to the first connection (11) of the first flat electrode (8) and the second voltage output (18') of the first voltage source (13) is electrically conductively connected only to the first connection (12) of the second flat electrode (9), and
wherein the first voltage output (19) of the second voltage source (14) is electrically conductively connected only to the second connection (11') of the first flat electrode (8) and the second voltage output (19') of the second voltage source (14) is electrically conductively connected only to the second connection (12') of the second flat electrode (9).

2. Laminated pane arrangement (101) according to claim 1, wherein the first and second connection (11, 11') of the first flat electrode (8) are arranged opposite one another in the plane of the first flat electrode (8), and/or the first and second connection (12, 12') of the second flat electrode (9) are arranged opposite one another in the plane of the second flat electrode (9).

3. Laminated pane arrangement (101) according to claim 2, wherein a distance between the first and second connection (11, 11') of the first flat electrode (8) is equal to a distance between the first and second connection (12, 12') of the second flat electrode (9).

4. Laminated pane arrangement (101), which comprises:
- a laminated pane (100) with an outer pane (1) and an inner pane (2) that are joined to one another via a thermoplastic intermediate layer (3), wherein a functional element (4) is embedded in the intermediate layer (3), which functional element includes an active layer (5) based on liquid crystals, whose optical properties can be controlled by a first flat electrode (8) and a second flat electrode (9),
- a first circuit (15), which has a first voltage source (13) with a first and second voltage output (18, 18') for providing a first AC voltage,
- a second circuit (16), which has a second voltage source (14) with a first and second voltage output (19, 19') for providing a second AC voltage, wherein the frequency of the second voltage source (14) is greater than the frequency of the first voltage source (13),
wherein the first voltage output (18) of the first voltage source (13) is electrically conductively connected only to a first connection (11) of the first flat electrode (8) and the second voltage output (18') of the first voltage source (13) is electrically conductively connected only to a first connection (12) of the second flat electrode (9),
wherein the first voltage output (19) of the second voltage source (14) is electrically conductively connected, with the interposition of a high-pass filter, to the first connection (11) connected to the first voltage source (13) or to a further first connection of the first flat electrode (8), and the second voltage output (19') of the second voltage source (14) is electrically conductively connected, with the interposition of a high-pass filter, to a second connection (11') of the first flat electrode (8), and/or
wherein the first voltage output (19) of the second voltage source (14) is electrically conductively connected, with the interposition of a high-pass filter, to the first connection (12) connected to the first voltage source (13) or to a further first connection of the second flat electrode (9), and the second voltage output (19') of the second voltage source (14) is electrically conductively connected, with the interposition of a high-pass filter, to a second connection (12') of the second flat electrode (9),
and wherein the high-pass filters are in each case designed such that they are permeable to the higher-frequency AC voltage of the second voltage source and block the lower-frequency AC voltage of the first voltage source.

5. Laminated pane arrangement (101) according to claim 4, wherein the first flat electrode (8) has exactly one first connection (11) and exactly one second connection (11') and/or the second flat electrode (9) has exactly one first connection (12) and exactly one second connection (12').

6. Laminated pane arrangement (101) according to claim 5, wherein the first and second connection (11, 11') of the first flat electrode (8) are arranged opposite one another in the plane of the first flat electrode (8), and/or the first and second connection (12, 12') of the second flat electrode (9) are arranged opposite one another in the plane of the second flat electrode (9).

7. Laminated pane arrangement (101) according to claim 6, wherein a distance between the first and second connection (11, 11') of the first flat electrode (8) is equal to a distance between the first and second connection (12, 12') of the second flat electrode (9).

8. Laminated pane arrangement (101) according to one of claims 1 through 7, wherein the connections (11, 11', 12, 12') of the flat electrodes (8, 9) are in each case implemented in the form of elongated connections, in particular bus bars, at opposite edges of the functional element (4).

9. Laminated pane arrangement (101) according to one of claims 1 through 8, wherein the flat electrodes (8, 9) are in each case rectangular.

10. Laminated pane arrangement (101) according to claim 8, wherein the elongated connections (11, 11', 12, 12') are arranged at the long edges of the functional element (4).

11. Laminated pane arrangement (101) according to one of claims 1 through 10, wherein the flat electrodes (8, 9) can be heated such that the active layer (5) of the functional element (4) has a temperature in the range above +5 °C.

12. Laminated pane arrangement (101) according to one of the preceding claims 1 through 11, with a temperature sensor in or near the electro-optical functional element (4) within the intermediate layer (3).

13. Laminated pane arrangement (101) according to one of the preceding claims 1 through 12, wherein the laminated pane is implemented as a windshield, roof glazing, side window, or rear window of a motor vehicle.

14. Laminated pane arrangement (101) according to one of the preceding claims 1 through 13, wherein the functional element (4) is a PDLC functional element.

15. Motor vehicle with a laminated pane arrangement (101) according to one of claims 1 through 14.

## Revendications

1. Agencement d'une vitre stratifiée (101), qui comprend :
- une vitre stratifiée (100) avec une vitre extérieure (1) et une vitre intérieure (2) reliées entre elles par une couche intermédiaire thermoplastique (3), dans laquelle un élément fonctionnel (4) est incorporé dans la couche intermédiaire (3), lequel élément fonctionnel comprend une couche active (5) à base de cristaux liquides, dont les propriétés optiques peuvent être contrôlées par une première électrode plate (8) et une seconde électrode plate (9), la première électrode plate (8) ayant une première et une seconde connexion (11, 11'), et la seconde électrode plate (9) ayant une première et une seconde connexion (12, 12'),
- un premier circuit (15), qui comporte une première source de tension (13) avec une première et une deuxième sortie de tension (18, 18') pour fournir une première tension alternative,
- un deuxième circuit (16), qui possède une deuxième source de tension (14) avec une première et une deuxième sortie de tension (19, 19') pour fournir une deuxième tension alternative, dans lequel une tension maximale de la deuxième tension alternative est supérieure à une tension maximale de la première tension alternative et les deux tensions alternatives ont la même fréquence,
dans laquelle la première sortie de tension (18) de la première source de tension (13) est connectée électriquement par conduction uniquement à la première connexion (11) de la première électrode plate (8) et la deuxième sortie de tension (18') de la première source de tension (13) est connectée électriquement par conduction uniquement à la première connexion (12) de la deuxième électrode plate (9), et
dans lequel la première sortie de tension (19) de la deuxième source de tension (14) est connectée électriquement par conduction uniquement à la deuxième connexion (11') de la première électrode plate (8) et la deuxième sortie de tension (19') de la deuxième source de tension (14) est connectée électriquement par conduction uniquement à la deuxième connexion (12') de la deuxième électrode plate (9).

2. Agencement d'une vitre stratifiée (101) selon la revendication 1, dans lequel la première et la deuxième connexion (11, 11') de la première électrode plate (8) sont disposées en vis-à-vis dans le plan de la première électrode plate (8), et/ou la première et la deuxième connexion (12, 12') de la deuxième électrode plate (9) sont disposées en vis-à-vis dans le plan de la deuxième électrode plate (9).

3. Agencement d'une vitre stratifiée (101) selon la revendication 2, dans lequel une distance entre la première et la deuxième connexion (11, 11') de la première électrode plate (8) est égale à une distance entre la première et la deuxième connexion (12, 12') de la deuxième électrode plate (9).

4. Agencement d'une vitre stratifiée (101), qui comprend :
- une vitre stratifiée (100) avec une vitre extérieure (1) et une vitre intérieure (2) reliées l'une à l'autre par une couche intermédiaire thermoplastique (3), dans laquelle un élément fonctionnel (4) est incorporé dans la couche intermédiaire (3), lequel élément fonctionnel comprend une couche active (5) à base de cristaux liquides, dont les propriétés optiques peuvent être contrôlées par une première électrode plate (8) et une deuxième électrode plate (9),
- un premier circuit (15), qui comporte une première source de tension (13) avec une première et une deuxième sortie de tension (18, 18') pour fournir une première tension alternative,
- un second circuit (16), qui comporte une seconde source de tension (14) avec une première et une seconde sortie de tension (19, 19') pour fournir une seconde tension alternative, la fréquence de la seconde source de tension (14) étant supérieure à la fréquence de la première source de tension (13),
la première sortie de tension (18) de la première source de tension (13) est connectée électriquement à une première connexion (11) de la première électrode plate (8) et la deuxième sortie de tension (18') de la première source de tension (13) est connectée électriquement à une première connexion (12) de la deuxième électrode plate (9),
dans lequel la première sortie de tension (19) de la deuxième source de tension (14) est connectée électriquement, avec l'interposition d'un filtre passe-haut, à la première connexion (11) connectée à la première source de tension (13) ou à une autre première connexion de la première électrode plate (8), et la deuxième sortie de tension (19') de la deuxième source de tension (14) est connectée électriquement, avec l'interposition d'un filtre passe-haut, à une deuxième connexion (11') de la première électrode plate (8), et/ou
dans lequel la première sortie de tension (19) de la deuxième source de tension (14) est connectée électriquement, avec l'interposition d'un filtre passe-haut, à la première connexion (12) connectée à la première source de tension (13) ou à une autre première connexion de la deuxième électrode plate (9), et la deuxième sortie de tension (19') de la deuxième source de tension (14) est connectée électriquement, avec l'interposition d'un filtre passe-haut, à une deuxième connexion (12') de la deuxième électrode plate (9),
et dans lequel les filtres passe-haut sont conçus de manière à être perméables à la tension alternative de plus haute fréquence de la deuxième source de tension et à bloquer la tension alternative de plus basse fréquence de la première source de tension.

5. Arrangement d'une vitre stratifiée (101) selon la revendication 4, dans lequel la première électrode plate (8) a exactement une première connexion (11) et exactement une deuxième connexion (11') et/ou la deuxième électrode plate (9) a exactement une première connexion (12) et exactement une deuxième connexion (12').

6. Agencement d'une vitre stratifiée (101) selon la revendication 5, dans lequel la première et la deuxième connexion (11, 11') de la première électrode plate (8) sont disposées en vis-à-vis dans le plan de la première électrode plate (8), et/ou la première et la deuxième connexion (12, 12') de la deuxième électrode plate (9) sont disposées en vis-à-vis dans le plan de la deuxième électrode plate (9).

7. Agencement d'une vitre stratifiée (101) selon la revendication 6, dans lequel une distance entre la première et la deuxième connexion (11, 11') de la première électrode plate (8) est égale à une distance entre la première et la deuxième connexion (12, 12') de la deuxième électrode plate (9).

8. Agencement d'une vitre stratifiée (101) selon l'une des revendications 1 à 7, dans lequel les connexions (11, 11', 12, 12') des électrodes plates (8, 9) sont réalisées dans chaque cas sous la forme de connexions allongées, en particulier de barres omnibus, sur les bords opposés de l'élément fonctionnel (4).

9. Arrangement d'une vitre stratifiée (101) selon l'une des revendications 1 à 8, dans lequel les électrodes plates (8, 9) sont dans chaque cas rectangulaires.

10. Arrangement d'une vitre stratifiée (101) selon la revendication 8, dans lequel les connexions allongées (11, 11', 12, 12') sont disposées sur les bords longs de l'élément fonctionnel (4).

11. Arrangement d'une vitre stratifiée (101) selon l'une des revendications 1 à 10, dans lequel les électrodes plates (8, 9) peuvent être chauffées de manière à ce que la couche active (5) de l'élément fonctionnel (4) ait une température supérieure à +5 °C.

12. Arrangement d'une vitre stratifiée (101) selon l'une des revendications précédentes 1 à 11, avec un capteur de température dans ou près de l'élément fonctionnel électro-optique (4) à l'intérieur de la couche intermédiaire (3).

13. Arrangement d'une vitre stratifiée (101) selon l'une des revendications précédentes 1 à 12, dans lequel le vitrage feuilleté est utilisé comme pare-brise, vitrage de toit, vitre latérale ou vitre arrière d'un véhicule automobile.

14. Arrangement d'une vitre stratifiée (101) selon l'une des revendications précédentes 1 à 13, dans lequel l'élément fonctionnel (4) est un élément fonctionnel PDLC.

15. Véhicule automobile équipé d'un arrangement d'une vitre stratifiée (101) selon l'une des revendications 1 à 14.
